# EUROPEAN PATENT APPLICATION

(11) **EP 4 700 734 A1**
(43) Date of publication of application: **25.02.2026**
(21) Application number: 25196359.1
(22) Date of filing: 18.08.2025
(51) Int. Cl.: G08B 13/196, G08B 29/18

(54) **METHODS AND APPARATUSES FOR OPERATING A SURVEILLANCE SYSTEM WITH REDUCED IMPACT**

(30) Priority: 19.08.2024 US 202463684756 P; 08.08.2025 US 202519295250
(71) Applicant: Tyco Fire & Security GmbH, 8212 Neuhausen am Rheinfall (CH)
(72) Inventor: FEE, Paul, Belfast (GB); MCCAMBRIDGE, John, Bangor (GB); DENNIS, Kevin, Newtownards (GB)
(74) Representative: Meissner Bolte Nürnberg

(57) **Abstract**

Certain aspects of the present disclosure may include methods, systems, and non-transitory computer readable media for receiving a first plurality of images from a first camera, analyzing the first plurality of images to identify an event, transmitting an indication signal to the first camera indicating the identifying of the event, and receiving a second plurality of images from the first camera in response to the first camera receiving the indication signal, the second plurality of images occupying more storage space than the first plurality of images.

## Description

The current Application relates to United Staes Patent Application No. 19/295,250 filed August 8, 2025, entitled "METHODS AND apparatuses for operating a surveillance system with reduced impact", and United States Provisional Application No. 63/684,756 filed August 19, 2024 and entitled "METHODS AND APPARATUSES FOR OPERATING A SURVEILLANCE SYSTEM WITH REDUCED IMPACT," the contents of which are hereby incorporated by reference in their entireties.

Aspects of the present disclosure relate to operating a surveillance system.

Surveillance cameras are frequently used to protect occupants and/or properties. Images captured by the surveillance cameras may be transmitted to a controller to be displayed to reviewers. In order to reduce camera costs and/or bandwidth usage, low quality images may be transmitted from the surveillance cameras to a controller for review and/or storage. If a reviewer notices a certain event that requires further examination, a signal may be sent to the corresponding camera to request high quality images more suitable for further examination. However, this would require the cameras to have higher storage capacity, which may increase the costs of the cameras. Therefore, improvements may be desirable.

Aspects of the present disclosure include a method for receiving a first plurality of images from a first camera, analyzing the first plurality of images to identify an event, transmitting an indication signal to the first camera indicating the identifying of the event, and receiving a second plurality of images from the first camera in response to the first camera receiving the indication signal, the second plurality of images occupying more storage space than the first plurality of images. Embodiments according to the invention are disclosed in particular in the appended claims.

The features believed to be characteristic of aspects of the disclosure are set forth in the appended claims. In the description that follows, like parts are marked throughout the specification and drawings with the same numerals, respectively. The drawing figures are not necessarily drawn to scale and certain figures may be shown in exaggerated or generalized form in the interest of clarity and conciseness. The disclosure itself, however, as well as a preferred mode of use, further objects and advantages thereof, will be best understood by reference to the following detailed description of illustrative aspects of the disclosure when read in conjunction with the accompanying drawings, wherein:
FIG. 1 illustrates an example of an environment for implementing a surveillance system in accordance with aspects of the present disclosure;
FIG. 2 illustrates an example of a method for training a neural network for image analytics in accordance with aspects of the present disclosure;
FIG. 3 illustrates an example method for implementing a surveillance system in accordance with aspects of the present disclosure; and
FIG. 4 illustrates an example of a computer system in accordance with aspects of the present disclosure.

The following includes definitions of selected terms employed herein. The definitions include various examples and/or forms of components that fall within the scope of a term and that may be used for implementation. The examples are not intended to be limiting.

In some aspects, closed circuit television (CCTV) systems use significant amounts of disk space to record high quality video from numerous cameras. To reduce storage requirements, CCTV systems may be configured to only record on an alarm and/or event. The terms alarm and event may be used interchangeably according to aspects of the present disclosure. However, it may be desirable to record content for a period leading up to the alarm/event that triggered the recording. While post alarm/event recording is not a challenge (just record for an additional period after the event), pre-alarm/event recording may require the content to be continuously recorded in anticipation of an alarm/event occurring.

In an aspect, a recorder may be capable of pre-alarm/event recording. Even though the content may be continuously captured, then deleted if not needed, this scheme may consume disk I/O resources. A system may also retain a pre-alarm/event buffer in random access memory (RAM). However, for a system with many cameras, the amount of RAM required may be excessive and/or cost prohibitive.

In certain aspects, pre-recording may allow disk activity on the recorder to be reduced until an alarm triggers. The recorder may record for the duration of the alarm (and beyond for the post-alarm/event buffer). The recorder may also communicate with the camera and request content corresponding to the pre-alarm period.

An aspect of the present disclosure includes requesting content for periods during which communication with the camera has been lost. The camera may record to local storage, such as a secure digital (SD) card or random access memory (RAM). The camera storage may offer limited retention (e.g., often enough to span a network outage). Similar mechanisms may be used to fill the pre-alarm/event buffer.

In some aspects, the pre-alarm/event buffer may be populated by recording continuously and then deleting stale recordings (as explained below) if no alarms/events have triggered. This may increase the resources used for the recordings.

An aspect of the present disclosure includes continuous recording and deleting on the recorder. Analytics may trigger alarm recording (alarm period and post-alarm buffer) on the recorder and camera/edge recording is used to populate the pre-alarm/event buffer. The analytics may be implemented on either the cameras, on-board, and/or offloaded to a separate engine. In some aspects, the recorder may perform continuous recording in anticipation of an alarm/event. Alternatively or additionally, if the camera is performing analytics, the camera may implement the pre-alarm, alarm period, and/or post-alarm recording, then make the entire clip available to the recorder. Aspects of the present disclosure may allow for the analytics to occur away from the recorder and/or the cameras, yet leverage the recording capability of the cameras.

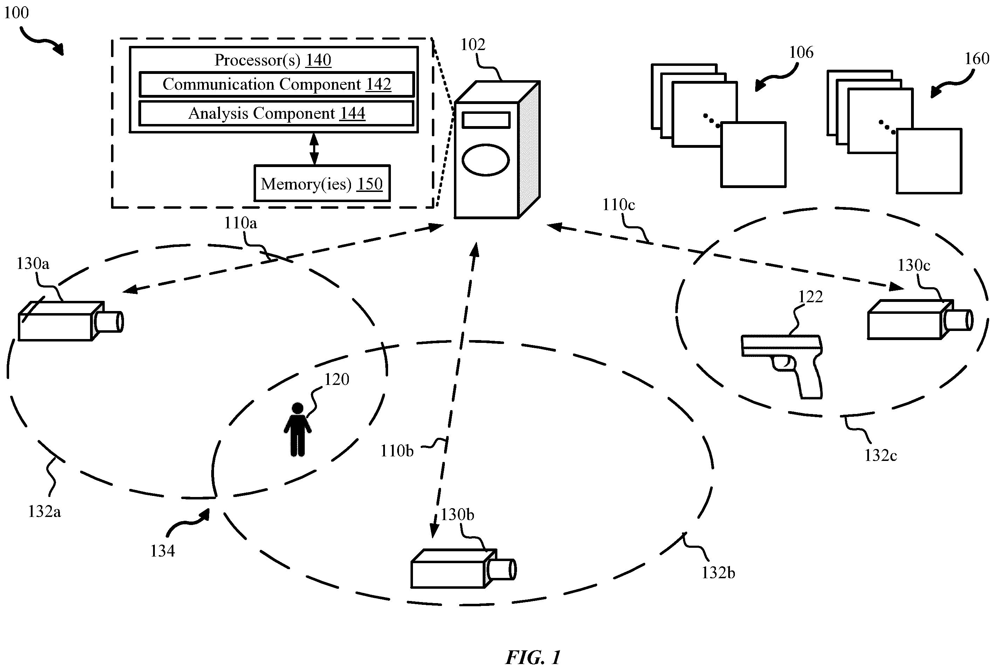

Referring to FIG. 1, in an aspect of the present disclosure, an example of an environment 100 for implementing a surveillance system including camera recording based on analytics is shown according to aspects of the present disclosure. The environment 100 may include a server 102 configured to receive, analyze, store, and/or transmit images. The environment 100 may include cameras, e.g., cameras 130a-c, configured to capture images of the environment 100. The cameras 130a-c may include pan-tilt-zoom (PTZ) cameras, infrared cameras, surveillance cameras, or other suitable cameras. The cameras 130a-c may be deployed in the environment 100 (e.g., an indoor environment, an outdoor environment, an infrastructure, a concert venue, a sports arena, a public transportation place, etc.). In some aspects, the cameras 130a-c may be configured to capture one or more first images 106 of objects, such as people, cars, and/or personal belongings (e.g., purses, bags, etc.), etc., within the environment 100. The cameras 130a-c may be configured transmit the one or more first images 106 to the server 102, via communication channels 110a-c, for analysis as described below. The communication channels 110a-c may be wired and/or wireless communication links.

In some aspects, the server 102 may include one or more processors 140 configured to execute instructions stored in one or more memories 150 for performing the functions described herein. The term "processor," as used herein, can refer to a device that processes signals and performs general computing and arithmetic functions. Signals processed by the processor can include digital signals, data signals, computer instructions, processor instructions, messages, a bit, a bit stream, or other computing that can be received, transmitted and/or detected. A processor, for example, can include microprocessors, controllers, digital signal processors (DSPs), field programmable gate arrays (FPGAs), programmable logic devices (PLDs), state machines, gated logic, discrete hardware circuits, and other suitable hardware configured to perform the various functionality described herein.

In some aspects, the server 102 may include the one or more memories 150. The one or more memories 150 may include software instructions and/or hardware instructions. The one or more processors 140 may execute the instructions to implement aspects of the present disclosure. The term "memory," as used herein, can include volatile memory and/or nonvolatile memory. Non-volatile memory can include, for example, ROM (read only memory), PROM (programmable read only memory), EPROM (erasable PROM) and EEPROM (electrically erasable PROM). Volatile memory can include, for example, RAM (random access memory), synchronous RAM (SRAM), dynamic RAM (DRAM), synchronous DRAM (SDRAM), double data rate SDRAM (DDR SDRAM), and direct RAM bus RAM (DRRAM).

In certain aspects, the one or more processors 140 may include a communication component 142 configured to communicate with the cameras 130a-c and/or other external devices (not shown) using transceivers (not shown). For example, the communication component 142 may be configured to receive the one or more first images 106 from one or more of the cameras 130a-c. The one or more processors 140 may include an analysis component 144 configured to analyze the one or more first images 106. Specifically, the analysis component 144 may be configured to detect an event based on the one or more first images 106 and/or other input.

During operation, a first camera 130a may monitor a first zone 132a in the environment 100. A first event 120 may occur in the first zone 132a. The first camera 130a may captures images of the first event 120. The first camera 130a may transmit a portion of the captured images, such as the one or more first images 106 associated with the first event 120, to the server 102. The communication component 142 of the server 102 may receive the one or more first images 106.

In some aspects of the present disclosure, the analysis component 144 of the server 102 may analyze the one or more first images 106 to identify the first event 120. To identify the first event 120, the analysis component 144 may identify features associated with the first event 120. The identified features may include sounds, colors, shapes, sizes, motions, movement speeds, interactions, and/or other identifiable features associated with objects in the one or more first images 106. Examples of the first event 120 may include a medical emergency, a first occurrence of an accident, a second occurrence of a crime, and/or other events that an operator of the system would want to be captured.

For example, if the first event 120 involves a person, the analysis component 144 may identify the gait, build, postures, actions, height, clothing colors and/or types, presence/absence of accessories (e.g., bags, glasses, scarfs, or hats, etc.), types of accessories (if any), hair color(s), race/ethnicity, items stolen, storage location, etc., associated with the person.

In another example, if the first event 120 involves a vehicle, the analysis component 144 may identify the make, model, color, design, number of occupants, movements, identifiers (e.g., license number), etc., associated with the vehicle.

In some aspects, the analysis component 144 may identify interactions and/or relationship between objects. For example, the analysis component 144 may identify that the first event 120 has interacted with other people, objects, etc.

In certain aspects, the analysis component 144 may identify the first event 120 based on the analysis above. In response to identifying the first event 120, the communication component 142 may transmit a signal via the communication channel 110a to the first camera 130a. The signal may indicate to the first camera 130a to capture, record, store, and/or transmit one or more second images 160. The one or more second images 160 may capture the first event 120. In one aspect, the one or more second images 160 may span a second time duration longer than a first time duration of the one or more first images 106. In other aspects, the one or more second images 160 may have a higher image quality than the image quality of the one or more first images 106. In yet another aspect, the one or more second images 160 may cover a larger camera view than the camera view of the one or more first images 106.

In certain aspects of the present disclosure, the server 102 may receive the one or more first images 106 from the first camera 130a. the analysis component 144 may identify the first event 120 as discussed above. In response to identifying the first event 120, the communication component 142 may transmit a signal via the communication channel 110b to the second camera 130b (different than the first camera 130a). The signal may indicate to the second camera 130b to capture, record, store, and/or transmit one or more second images 160. The one or more second images 160 may capture the first event 120.

In one aspect of the present disclosure, the one or more first images 106 may include audio information. The first event 120 may include an event associated with the audio information. The first camera 130a may transmit the one or more second images 160 based on the first event 120 as triggered by analyzing the audio information. The one or more second images 160 may include audio information. In one aspect of the present disclosure, the audio information of the one or more second images 160 may have higher quality than the audio information of the one or more first images 106.

In a first example of operating the surveillance system of FIG. 1, the first camera 130a may continuously monitor the first zone 132a by capturing images. The captured images may be stored locally in the first camera 130a. The first camera 130a may periodically transmit the captured images to the server 102. Further, in order to free storage space in the first camera 130a, "stale" images (images that are no longer needed for review/analysis of the event/alarm) may be deleted. In some cases, the "stale" images may be images that are captured before a threshold amount of time.

In an instance, the first camera 130a may transmit the one or more first images 106 to the server 102. The analysis component 144 may analyze the one or more first images 106 and identify the first event 120. Specifically, the analysis component 144 may analyze the one or more first images 106 and identify a person being robbed by suspect. In response to identifying the first event 120, the communication component 142 may transmit the indication signal to the first camera 130a. In response to receiving the indication signal, the first camera 130a may transmit the one or more second images 160 to the server 102. The one or more second images 160 may be images that are stored in the first camera 130a that have not been deleted. The one or more second images 160 may span a time duration longer than a time duration of the one or more first images 106. The one or more second images 160 may span a time duration of 10 minutes and the one or more first images 106 may span a time duration of 1 minute. Other durations may also be possible according to aspects of the present disclosure.

In some aspects, the first camera 130a may transmit the one or more second images 160 to the server 102. The one or more second images 160 may be used by law enforcement agents to identify the suspect (e.g., car the suspect operated when arriving at the first zone 132a, different angles of the suspect, etc.).

In a second example of operating the surveillance system of FIG. 1, the first camera 130a may continuously monitor the first zone 132a by capturing images. The captured images may be stored locally in the first camera 130a. The first camera 130a may generate low quality images of the captured images. The low quality images may be the captured images with lower resolution, contrast, aspect ratios, frames per second, etc. The first camera 130a periodically transmit the low quality images to the server 102 (i.e., the one or more first images 106).

In an instance, the first camera 130a may transmit the one or more first images 106 to the server 102. The one or more first images 106 may be the low quality images of one or more second images 106 (the captured images). The analysis component 144 may analyze the one or more first images 106 and identify the first event 120. In response to receiving the indication signal, the first camera 130a may transmit the one or more second images 160 to the server 102. The one or more second images 160 may have a higher image quality than the one or more first images 106.

In one instance, the analysis component 144 may analyze the one or more first images 106 and identify a person being struck by a vehicle. The vehicle may have left the scene after striking the person. In response to identifying the first event 120, the communication component 142 may transmit the indication signal to the first camera 130a.

In some aspects, the first camera 130a may transmit the one or more second images 160 to the server 102. While the low quality image (i.e., the one or more first images 106) may not have sufficient image quality to identify the vehicle, the high quality images (i.e., the one or more second images 160) may have sufficient image quality for identification. The one or more second images 160 may be used by law enforcement agents to identify the vehicle (e.g., license plate number, make, model, etc.).

In a third example of operating the surveillance system of FIG. 1, the first camera 130a may continuously monitor the first zone 132a, including an overlapping region 134 (as described below), by capturing images. The captured images may be stored locally in the first camera 130a. Further, the second camera 130a may continuously monitor a second zone 132b having the overlapping region 134. The overlapping region 134 may be a region that can be monitored by both the first camera 130a and the second camera 130b.

In an instance, the first camera 130a may transmit the one or more first images 106 to the server 102. The analysis component 144 may analyze the one or more first images 106 and identify the first event 120. Specifically, the analysis component 144 may analyze the one or more first images 106 and identify a potential suspect of a crime. In response to identifying the first event 120, the communication component 142 may transmit the first indication signal to the first camera 130a and the second indication signal to the second camera 130b to indicate the identifying of the first event 120. In response to receiving the first indication signal, the first camera 130a may transmit the one or more second images 160 to the server 102. Further, in response to receiving the second indication signal, the second camera 130b may transmit images of the second zone 132b to the server 102.

In some aspects, the images transmitted by the first camera 130a and the second camera 130b may be used by security personnel to ascertain whether the person is the suspect (e.g., where the person came from the crime scene prior to arriving at the overlapping region 134).

In a fourth example of operating the surveillance system of FIG. 1, the third camera 130c may continuously monitor the third zone 132c by capturing images and sounds. The captured images and sounds may be stored locally in the third camera 130c. The third camera 130c may transmit the one or more first images 106, including associated audio information, to the server 102. The analysis component 144 may analyze the one or more first images 106 and the audio information and identify the second event 122. Specifically, the analysis component 144 may analyze the audio information and identify a gun shot sound. In response to identifying the second event 122, the communication component 142 may transmit the indication signal to the third camera 130c. In response to receiving the indication signal, the third camera 130c may transmit the one or more second images 160 to the server 102 for detail analysis/storage. Here, the indication signal may include a time stamp, a frame number, and/or other identifiers used to identify the requested one or more second images 160 from the third camera 130b.

In some aspects, the images transmitted by the third camera 130c may be used by law enforcement agents to search for the suspect firing the gun shot.

In other aspects of the present disclosure, the environment 100 may include one or more sensors (not shown). The one or more sensors may detect light, sound (e.g., gun shots), smoke, fire, intruder/trespasser, broken glass, etc. The one or more sensors may transmit the indication signal to the cameras 130a-c. In response to receiving the indication signal directly from the one or more sensors, the cameras 130a-c may transmit the one or more second images 160 to the server 102.

In certain aspects, the analysis component 144 may be disposed within the server 102. In other aspects, the analysis component 144 may be disposed within the cameras 130a-c, in the cloud, and/or other local or remote locations.

In one aspect of the present disclosure, the analysis component 144 may include an artificial intelligent engine (not shown) that may analyze the images using machine learning and/or a neural network as described below.

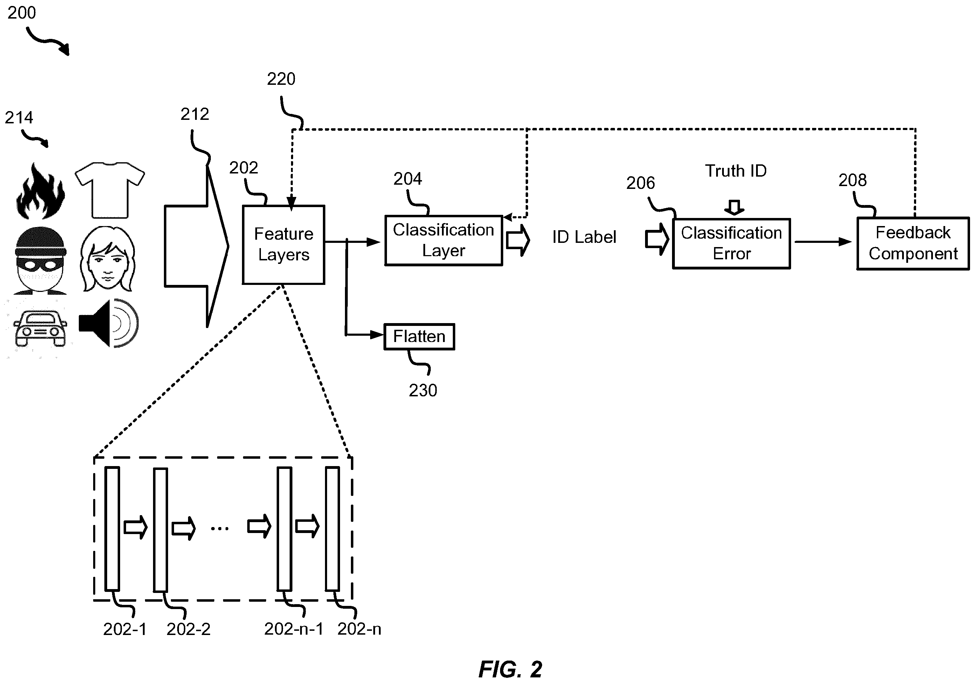

Turning to FIG. 2, an example of training a neural network 200 for identification may include feature layers 202 that receive training images 212 of features/objects/environment 214. The training images 212 may include images of the features/objects/environment 214 from different angles, under different lighting conditions, partial images of the features/objects/environment 214, etc. The feature layers 202 may be a deep learning algorithm that includes feature layers 202-1, 202-2... , 202-n-1, 202-n. Each of the feature layers 202-1, 202-2..., 202-n-1, 202-n may perform a different function and/or algorithm (e.g., pattern detection, transformation, feature extraction, etc.). In a non-limiting example, the feature layer 202-1 may identify edges of the training images 212, the feature layer 202-2 may identify corners of the training images 212, the feature layer 202-n-1 may perform a non-linear transformation, and the feature layer 202-n may perform a convolution. In another example, the feature layer 202-1 may apply an image filter to the training images 212, the feature layer 202-2 may perform a Fourier Transform to the training images 212, the feature layer 202-n-1 may perform an integration, and the feature layer 202-n may identify a vertical edge and/or a horizontal edge. Other implementations of the feature layers 202 may also be used to extract features of the training images 212.

In certain implementations, the output of the feature layers 202 may be provided as input to a classification layer 204. The classification layer 204 may be configured to identify the features (e.g., appearance, height, built, hair color, ethnicity, etc.), objects (e.g., accessories such as hats and glasses, clothing, and/or jewelry worn by the first event 120), and/or environmental information (e.g., cars driven, potential witnesses, accomplices, etc.) associated with the first event 120.

In some implementations, the classification layers 204 may output the ID label. A classification error component 206 may receive the ID label and a ground truth ID as input. The ground truth ID may be the "correct answer" provided by a trainer (not shown) to the neural network 200 during training. For example, the neural network 200 may compare the ID label to the ground truth ID to determine whether the classification layer 204 properly identifies the features/objects/environment associated with the ID label.

In some instances, the neural network 200 may include a feedback component 208. Based on the ID label and the ground truth ID, the classification error component 206 may output an error into the feedback component 208. The feedback component 208 may receive the error and provide one or more updated parameters 220 to the feature layers 202 and/or the classification layer 204. The one or more updated parameters 220 may include modifications to parameters and/or equations to reduce the error.

In some examples, the neural network 200 may include a flatten function 230 that generates a final output of the feature extraction step. For example, the flatten function 230 may be an operator that transforms a matrix of features into a vector. The output of the neural network 200 may include a vector describing the features/objects/environment.

In some aspects, the neural network 200 may be adapted to recognize sounds according to aspects of the present disclosure.

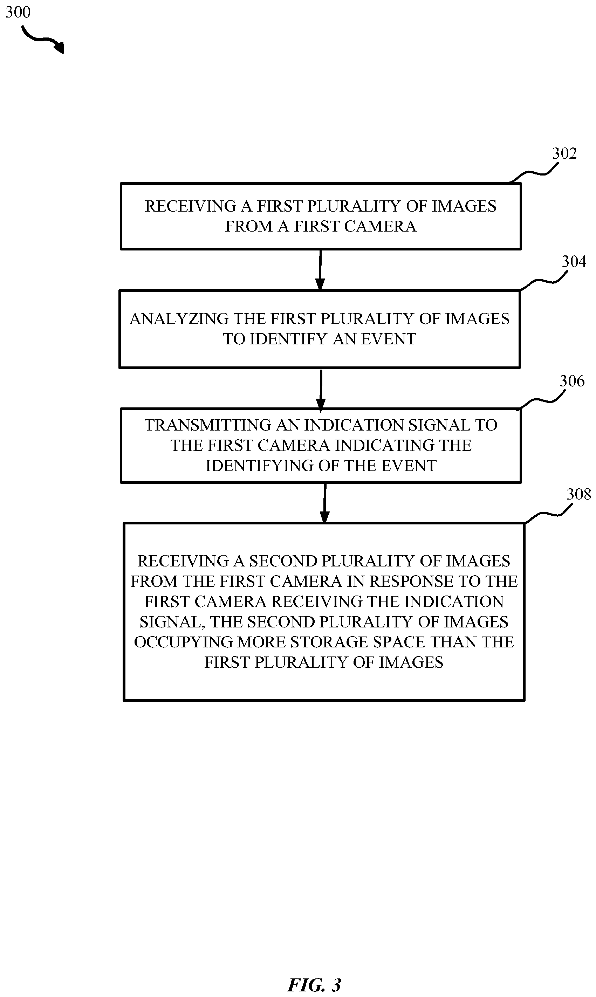

Turning to FIG. 3, an example of a method 300 for operating a surveillance system may be implemented by the server 102, the cameras 130a-c, the one or more processors 140, the communication component 142, the analysis component 144, and/or the one or more memories 150. One or more of the server 102, the cameras 130a-c, the one or more processors 140, the communication component 142, the analysis component 144, and/or the one or more memories 150 may be configured to or provide means for implementing aspects of the method 300.

At block 302, the method 300 may receive a first plurality of images from a first camera. The server 102, the one or more processors 140, the communication component 142, and/or the one or more memories 150 may be configured to or provide means for receiving a first plurality of images from a first camera.

At block 304, the method 300 may analyze the first plurality of images to identify an event. The server 102, the one or more processors 140, the analysis component 144, and/or the one or more memories 150 may be configured to or provide means for analyzing the first plurality of images to identify an event.

At block 306, the method 300 may transmit an indication signal to the first camera indicating the identifying of the event. The server 102, the one or more processors 140, the communication component 142, and/or the one or more memories 150 may be configured to or provide means for transmitting an indication signal to the first camera indicating the identifying of the event.

At block 308, the method 300 may receive a second plurality of images from the first camera in response to the first camera receiving the indication signal, the second plurality of images occupying more storage space than the first plurality of images. The server 102, the one or more processors 140, the communication component 142, and/or the one or more memories 150 may be configured to or provide means for receiving a second plurality of images from the first camera in response to the first camera receiving the indication signal, the second plurality of images occupying more storage space than the first plurality of images.

Aspects of the present disclosure include the method above, wherein analyzing the first plurality of images comprises identifying a medical emergency, a first occurrence of an accident, or a second occurrence of a crime.

Aspects of the present disclosure include any of the methods above, wherein receiving the first plurality of images comprises receiving audio information associated with the first plurality of images and analyzing the first plurality of images comprises analyzing the audio information to identify the event.

Aspects of the present disclosure include any of the methods above, wherein the second plurality of images span a second time duration longer than a first time duration associated with the first plurality of images.

Aspects of the present disclosure include any of the methods above, wherein a second quality of the second plurality of images is higher than a first quality of the first plurality of images.

Aspects of the present disclosure include any of the methods above, further comprising transmitting a second indication signal to a second camera indicating the identifying of the event and receiving a third plurality of images from the second camera in response to the second camera receiving the indication signal, the third plurality of images includes more images than the first plurality of images.

Aspects of the present disclosure include any of the methods above, wherein analyzing the first plurality of images comprises analyzing the first plurality of images using a neural network.

Aspects of the present disclosure include any of the methods above, further comprising storing the second plurality of images and analyzing the event based on the second plurality of images.

Aspects of the present disclosure include any of the methods above, further comprising transmitting an alert in response to analyzing the event based on the second plurality of images.

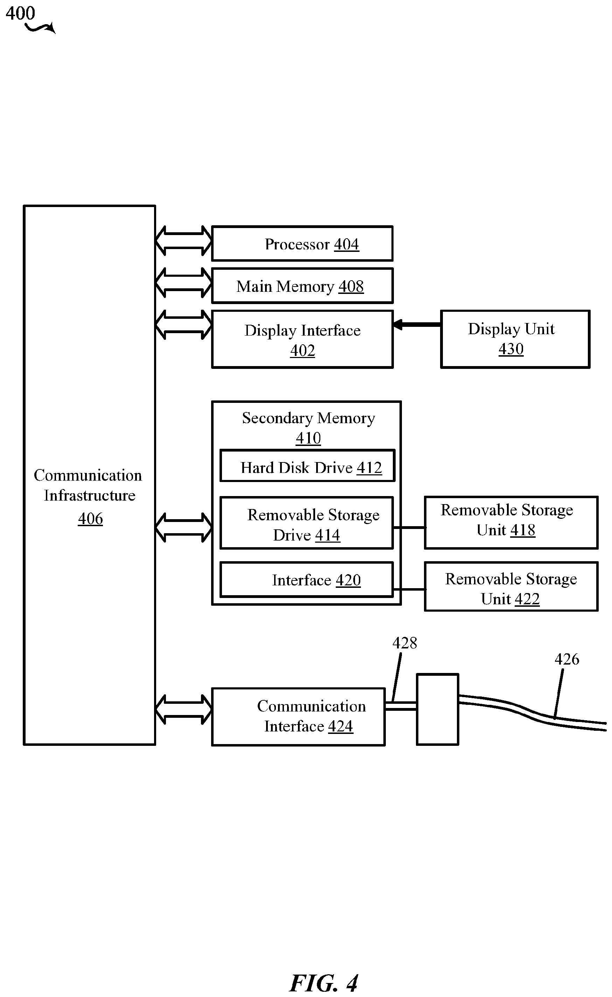

Aspects of the present disclosures may be implemented using hardware, software, or a combination thereof and may be implemented in one or more computer systems or other processing systems. In an aspect of the present disclosures, features are directed toward one or more computer systems capable of carrying out the functionality described herein. An example of such the computer system 400 is shown in FIG. 4. In some examples, the server 102 and/or the cameras 130a-c may be implemented as the computer system 400 shown in FIG. 4. The server 102 and/or the cameras 130a-c may include some or all of the components of the computer system 400.

The computer system 400 includes one or more processors, such as processor 404. The processor 404 is connected with a communication infrastructure 406 (e.g., a communications bus, cross-over bar, or network). Various software aspects are described in terms of this example computer system. After reading this description, it will become apparent to a person skilled in the relevant art(s) how to implement aspects of the disclosures using other computer systems and/or architectures.

The computer system 400 may include a display interface 402 that forwards graphics, text, and other data from the communication infrastructure 406 (or from a frame buffer not shown) for display on a display unit 430. Computer system 400 also includes a main memory 408, preferably random access memory (RAM), and may also include a secondary memory 410. The secondary memory 410 may include, for example, a hard disk drive 412, and/or a removable storage drive 414, representing a floppy disk drive, a magnetic tape drive, an optical disk drive, a universal serial bus (USB) flash drive, etc. The removable storage drive 414 reads from and/or writes to a removable storage unit 418 in a well-known manner. Removable storage unit 418 represents a floppy disk, magnetic tape, optical disk, USB flash drive etc., which is read by and written to removable storage drive 414. As will be appreciated, the removable storage unit 418 includes a computer usable storage medium having stored therein computer software and/or data. In some examples, one or more of the main memory 408, the secondary memory 410, the removable storage unit 418, and/or the removable storage unit 422 may be a non-transitory memory.

Alternative aspects of the present disclosures may include secondary memory 410 and may include other similar devices for allowing computer programs or other instructions to be loaded into computer system 400. Such devices may include, for example, a removable storage unit 422 and an interface 420. Examples of such may include a program cartridge and cartridge interface (such as that found in video game devices), a removable memory chip (such as an erasable programmable read only memory (EPROM), or programmable read only memory (PROM)) and associated socket, and the removable storage unit 422 and the interface 420, which allow software and data to be transferred from the removable storage unit 422 to computer system 400.

Computer system 400 may also include a communications circuit 424. The communications circuit 424 may allow software and data to be transferred between computer system 400 and external devices. Examples of the communications circuit 424 may include a modem, a network interface (such as an Ethernet card), a communications port, a Personal Computer Memory Card International Association (PCMCIA) slot and card, etc. Software and data transferred via the communications circuit 424 are in the form of signals 428, which may be electronic, electromagnetic, optical or other signals capable of being received by the communications circuit 424. These signals 428 are provided to the communications circuit 424 via a communications path (e.g., channel) 426. This path 426 carries signals 428 and may be implemented using wire or cable, fiber optics, a telephone line, a cellular link, an RF link and/or other communications channels. In this document, the terms "computer program medium" and "computer usable medium" are used to refer generally to media such as the removable storage unit 418, a hard disk installed in hard disk drive 412, and signals 428. These computer program products provide software to the computer system 400. Aspects of the present disclosures are directed to such computer program products.

Computer programs (also referred to as computer control logic) are stored in main memory 408 and/or secondary memory 410. Computer programs may also be received via communications circuit 424. Such computer programs, when executed, enable the computer system 400 to perform the features in accordance with aspects of the present disclosures, as discussed herein. In particular, the computer programs, when executed, enable the processor 404 to perform the features in accordance with aspects of the present disclosures. Accordingly, such computer programs represent controllers of the computer system 400.

In an aspect of the present disclosures where the method is implemented using software, the software may be stored in a computer program product and loaded into computer system 400 using removable storage drive 414, hard disk drive 412, or the interface 420. The control logic (software), when executed by the processor 404, causes the processor 404 to perform the functions described herein. In another aspect of the present disclosures, the system is implemented primarily in hardware using, for example, hardware components, such as application specific integrated circuits (ASICs). Implementation of the hardware state machine so as to perform the functions described herein will be apparent to persons skilled in the relevant art(s).

It will be appreciated that various implementations of the above-disclosed and other features and functions, or alternatives or varieties thereof, may be desirably combined into many other different systems or applications. Also that various presently unforeseen or unanticipated alternatives, modifications, variations, or improvements therein may be subsequently made by those skilled in the art which are also intended to be encompassed by the following claims.

Further embodiments of the present invention may be summarized as follows. Any of these embodiments can be claimed in a separate claim, e.g. by substituting the word "Embodiment" by "Claim", in particular in the order as mentioned below and/or in any combination with any embodiment described above or with any of the features of the attached claims:
Embodiment 1. A method for operating a surveillance system, comprising: receiving a first plurality of images from a first camera;
   analyzing the first plurality of images to identify an event;
   transmitting an indication signal to the first camera indicating the identifying of the event; and
   receiving a second plurality of images from the first camera in response to the first camera receiving the indication signal, the second plurality of images occupying more storage space than the first plurality of images.
Embodiment 2. The method of embodiment 1, wherein analyzing the first plurality of images comprises identifying a medical emergency, a first occurrence of an accident, or a second occurrence of a crime.
Embodiment 3. The method of embodiment 1 or 2, wherein:
   receiving the first plurality of images comprises receiving audio information associated with the first plurality of images; and
   analyzing the first plurality of images comprises analyzing the audio information to identify the event.
Embodiment 4. The method of any of embodiments 1 to 3, wherein the second plurality of images span a second time duration longer than a first time duration associated with the first plurality of images.
Embodiment 5. The method of any of embodiments 1 to 4, wherein a second quality of the second plurality of images is higher than a first quality of the first plurality of images.
Embodiment 6. The method of any of embodiments 1 to 5, further comprising:
   transmitting a second indication signal to a second camera indicating the identifying of the event; and
   receiving a third plurality of images from the second camera in response to the second camera receiving the indication signal, the third plurality of images includes more images than the first plurality of images.
Embodiment 7. The method of any of embodiments 1 to 6, wherein analyzing the first plurality of images comprises analyzing the first plurality of images using a neural network.
Embodiment 8. The method of any of embodiments 1 to 7, further comprising:
   storing the second plurality of images; and
   analyzing the event based on the second plurality of images.
Embodiment 9. The method of embodiment 8, further comprising transmitting an alert in response to analyzing the event based on one or more of the first plurality of images or the second plurality of images.
Embodiment 10. A server, comprising:
   one or more memories including instructions; and
   one or more processors communicatively coupled to the one or more memories and configured to execute the instructions to:
      receive a first plurality of images from a first camera;
      analyze the first plurality of images to identify an event;
      transmit an indication signal to the first camera indicating the identifying of the event; and
      receive a second plurality of images from the first camera in response to the first camera receiving the indication signal, the second plurality of images occupying more storage space than the first plurality of images.
Embodiment 11. The server of embodiment 10, wherein the one or more processors are further configured to analyze the first plurality of images by identifying a medical emergency, a first occurrence of an accident, or a second occurrence of a crime.
Embodiment 12. The server of embodiment 10 or 11, wherein the one or more processors are further configured to:
   receive the first plurality of images by receiving audio information associated with the first plurality of images; and
   analyze the first plurality of images by analyzing the audio information to identify the event.
Embodiment 13. The server of any of embodiments 10 to 12, wherein the second plurality of images span a second time duration longer than a first time duration associated with the first plurality of images.
Embodiment 14. The server of any of embodiments 10 to 13, wherein a second quality of the second plurality of images is higher than a first quality of the first plurality of images.
Embodiment 15. The server of any of embodiments 10 to 14, wherein the one or more processors are further configured to:
   transmit a second indication signal to a second camera indicating the identifying of the event; and
   receive a third plurality of images from the second camera in response to the second camera receiving the indication signal, the third plurality of images includes more images than the first plurality of images.
Embodiment 16. The server of any of embodiments 10 to 15, wherein the one or more processors are further configured to analyze the first plurality of images by analyzing the first plurality of images using a neural network.
Embodiment 17. The server of any of embodiments 10 to 16, wherein the one or more processors are further configured to:
   store the second plurality of images; and
   analyze the event based on the second plurality of images.
Embodiment 18. The server of embodiment 17, wherein the one or more processors are further configured to transmit an alert in response to analyzing the event based on one or more of the first plurality of images or the second plurality of images.
Embodiment 19. A non-transitory computer readable medium including instructions that, when executed by one or more processors of a server, cause the one or more processors to:
   receive a first plurality of images from a first camera;
   analyze the first plurality of images to identify an event;
   transmit an indication signal to the first camera indicating the identifying of the event; and
   receive a second plurality of images from the first camera in response to the first camera receiving the indication signal, the second plurality of images occupying more storage space than the first plurality of images.
Embodiment 20. The non-transitory computer readable medium of embodiment 19, wherein the instructions for analyzing the first plurality of images comprises instructions for identifying a medical emergency, a first occurrence of an accident, or a second occurrence of a crime.
Embodiment 21. The non-transitory computer readable medium of embodiment 19 or 20, wherein the instructions for:
   receiving the first plurality of images comprises instructions for receiving audio information associated with the first plurality of images; and
   analyzing the first plurality of images comprises instructions for analyzing the audio information to identify the event.
Embodiment 22. The non-transitory computer readable medium of any of embodiments 19 to 21, wherein the second plurality of images span a second time duration longer than a first time duration associated with the first plurality of images.
Embodiment 23. The non-transitory computer readable medium of any of embodiments 19 to 22, wherein a second quality of the second plurality of images is higher than a first quality of the first plurality of images.
Embodiment 24. The non-transitory computer readable medium of any of embodiments 19 to 23, further comprising instructions for:
   transmitting a second indication signal to a second camera indicating the identifying of the event; and
   receiving a third plurality of images from the second camera in response to the second camera receiving the indication signal, the third plurality of images includes more images than the first plurality of images.
Embodiment 25. The non-transitory computer readable medium of any of embodiments 19 to 24, wherein the instructions for analyzing the first plurality of images comprises instructions for analyzing the first plurality of images using a neural network.
Embodiment 26. The non-transitory computer readable medium of any of embodiments 19 to 25, further comprising instructions for:
   storing the second plurality of images; and
   analyzing the event based on the second plurality of images.
Embodiment 27. The non-transitory computer readable medium of embodiment 26, further comprising instructions for transmitting an alert in response to analyzing the event based on one or more of the first plurality of images or the second plurality of images.
Embodiment 28. A server, comprising:
   one or more memories including instructions; and
   one or more processors communicatively coupled to the one or more memories and configured to execute the instructions to perform a method according to any of embodiments 1 to 9.
Embodiment 29. A non-transitory computer readable medium including instructions that, when executed by one or more processors of a server, cause the one or more processors to perform a method according to any of embodiments 1 to 9.

## Claims

1. A method for operating a surveillance system, comprising:
receiving a first plurality of images from a first camera;
analyzing the first plurality of images to identify an event;
transmitting an indication signal to the first camera indicating the identifying of the event; and
receiving a second plurality of images from the first camera in response to the first camera receiving the indication signal, the second plurality of images occupying more storage space than the first plurality of images.

2. The method of claim 1, wherein analyzing the first plurality of images comprises identifying a medical emergency, a first occurrence of an accident, or a second occurrence of a crime.

3. The method of claim 1 or 2, wherein:
receiving the first plurality of images comprises receiving audio information associated with the first plurality of images; and
analyzing the first plurality of images comprises analyzing the audio information to identify the event.

4. The method of any of claims 1 to 3, wherein the second plurality of images span a second time duration longer than a first time duration associated with the first plurality of images.

5. The method of any of claims 1 to 4, wherein a second quality of the second plurality of images is higher than a first quality of the first plurality of images.

6. The method of any of claims 1 to 5, further comprising:
transmitting a second indication signal to a second camera indicating the identifying of the event; and
receiving a third plurality of images from the second camera in response to the second camera receiving the indication signal, the third plurality of images includes more images than the first plurality of images.

7. The method of any of claims 1 to 6, wherein analyzing the first plurality of images comprises analyzing the first plurality of images using a neural network.

8. The method of any of claims 1 to 7, further comprising:
storing the second plurality of images; and
analyzing the event based on the second plurality of images.

9. The method of claim 8, further comprising transmitting an alert in response to analyzing the event based on one or more of the first plurality of images or the second plurality of images.

10. A server, comprising:
one or more memories including instructions; and
one or more processors communicatively coupled to the one or more memories and configured to execute the instructions to perform a method according to any of claims 1 to 9.

11. A non-transitory computer readable medium including instructions that, when executed by one or more processors of a server, cause the one or more processors to perform a method according to any of claims 1 to 9.
